(19) Europäisches Patentamt / European Patent Office / Office européen des brevets

(11) **EP 4 383 235 A1**

(12) **EUROPEAN PATENT APPLICATION**
published in accordance with Art. 153(4) EPC

(43) Date of publication:
**12.06.2024 Bulletin 2024/24**

(21) Application number: **22852893.1**

(22) Date of filing: **26.07.2022**

(51) International Patent Classification (IPC):
*G09C 1/00* (2006.01)

(52) Cooperative Patent Classification (CPC):
**G09C 1/00**

(86) International application number:
**PCT/JP2022/028741**

(87) International publication number:
**WO 2023/013470 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2021 JP 2021127442**

(71) Applicant: **KDDI Corporation**
**Tokyo 163-8003 (JP)**

(72) Inventors:
• **NAKANO Yuto**
**Fujimino-shi, Saitama 356-8502 (JP)**
• **FUKUSHIMA Kazuhide**
**Fujimino-shi, Saitama 356-8502 (JP)**

(74) Representative: **Krauns, Christian**
**Wallinger Ricker Schlotter Tostmann**
**Patent- und Rechtsanwälte Partnerschaft mbB**
**Zweibrückenstraße 5-7**
**80331 München (DE)**

(54) **ENCRYPTION DEVICE, ENCRYPTION METHOD, AND ENCRYPTION PROGRAM**

(57) An encryption device that implements an encryption scheme in which AES round functions are executed multiple times in order to update each of multiple internal states of a defined bit length, the encryption device being provided with a processing unit that, by calling a single prescribed instruction, collectively processes a group of the round functions that can be executed in parallel, wherein the instruction has an upper limit on a number of bits that can be processed, and the round functions are grouped to minimize a processing load in accordance with a number of times the instruction is called.

FIG. 3

**Description**

TECHNICAL FIELD

The present invention relates to a high-speed implementation method for an encryption scheme.
The present application claims priority on Japanese Patent Application No. 2021-127442, filed August 3, 2021, the entire disclosure of which is incorporated herein by reference.

BACKGROUND ART

Conventionally, special instruction sets for executing specific processes at a high speed have sometimes been implemented in processors such as CPUs. For example, an instruction set (AES-NI) for executing AES (Advanced Encryption Standard) processes at a high speed is implemented in Intel (registered trademark) CPUs, etc. By making use of this instruction set, AES round functions can be processed at a high speed. In Non-Patent Document 1, the use of this instruction set to implement high-speed encryption schemes is considered.

[Prior Art Documents]

[Non-Patent Documents]

[Non-Patent Document 1] J. Jean and 1. Nikolic, "Efficient Design Strategies Based on the AES Round Function", in Fast Software Encryption, vol. 9783, T. Peyrin, Ed. Berlin, Heidelberg: Springer Berlin Heidelberg, 2016, pp. 334-353.

SUMMARY OF INVENTION

[Problems to be Solved by the Invention]

However, in the above-mentioned conventional instruction set, instructions must be called a number of times equivalent to the number of times that the AES round function is executed, and a sufficiently high speed was not attained.
Therefore, an objective of the present invention is to provide an encryption device, an encryption method, and an encryption program that can execute an encryption scheme using AES round functions at a high speed.

[Means for Solving the Problems]

An encryption device according to an embodiment of the present invention implements an encryption scheme in which AES round functions are executed multiple times in order to update each of multiple internal states of a defined bit length, the encryption device including a processing unit that, by calling a single prescribed instruction, collectively processes a group of the round functions that can be executed in parallel, wherein the instruction has an upper limit on a number of bits that can be processed, and the round functions are grouped to minimize a processing load in accordance with a number of times the instruction is called.
In the above-mentioned encryption device, among the multiple round functions, those for which subsequent operations are of the same type may be grouped.
In the above-mentioned encryption device, among the multiple round functions, those for which input values to subsequent operations are at least partially the same may be grouped.
In the above-mentioned encryption device, the round functions may be grouped by multiple instructions having different upper limits on the number of bits that can be processed.
An encryption method according to an embodiment of the present invention is performed when a computer implements an encryption scheme in which AES round functions are executed multiple times in order to update each of multiple internal states of a defined bit length, the encryption method including collectively processing, by calling a single prescribed instruction, a group of the round functions that can be executed in parallel, wherein the instruction has an upper limit on a number of bits that can be processed, and the round functions are grouped to minimize a processing load in accordance with a number of times the instruction is called.
An encryption program according to the present invention makes a computer function as the aforementioned encryption device.

[Advantageous Effects of the Invention]

According to the present invention, an encryption scheme using the AES round function can be executed at a high speed.

BRIEF DESCRIPTION OF DRAWINGS

FIG. 1 is a diagram illustrating an example of a conventional implementation method for an encryption scheme.
FIG. 2 is a block diagram illustrating an encryption device according to an embodiment.
FIG. 3 is a diagram illustrating an example of an implementation method for an encryption scheme according to an embodiment.

EMBODIMENTS FOR CARRYING OUT THE INVENTION

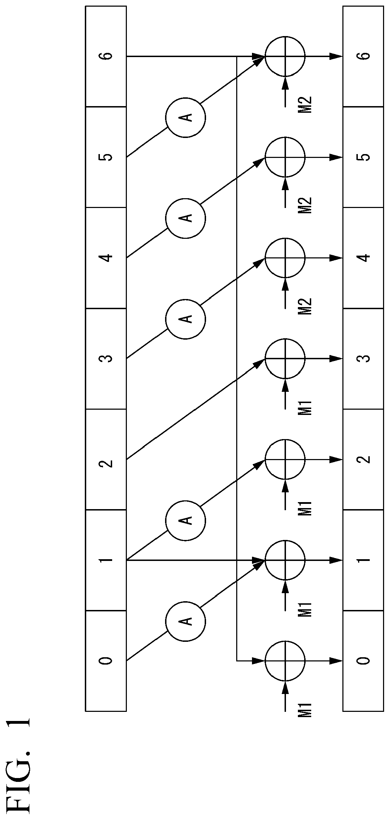

Before explaining embodiments of the present invention, a conventional implementation method for an encryption scheme will be explained with reference to FIG. 1 in order to clarify the differences from the embodiments of the present invention.

FIG. 1 is a diagram illustrating an example of a conventional implementation method for an encryption scheme.

This example is one of the configurations proposed in the aforementioned Non-Patent Document 1. In this case, with respect to seven internal states (0 to 6) that are each 128-bit values, the AES round function (A) is executed five times, and XOR operations with messages (M1 or M2) are executed seven times to convert them to new internal states.

In this case, the processing speed of the encryption scheme overall is increased by implementing an instruction set that executes round functions at a high speed.

In this implementation method, as illustrated in FIG. 1, an encryption device that implements an encryption scheme in which AES round functions are executed multiple times in order to update each of multiple internal states of a defined bit length (for example, 128 bits) is provided.

Hereinafter, an example of an embodiment of the present invention will be explained.

In the present embodiment, the conventional implementation method for an encryption scheme is improved by using an instruction set prepared for a specific CPU, thereby reducing the number of processing cycles necessary for executing the AES round functions, thus realizing a higher speed.

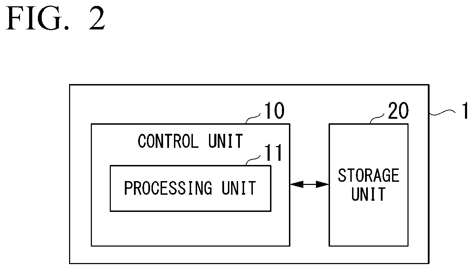

FIG. 2 is a block diagram illustrating the functional configuration of an encryption device 1 according to the present embodiment.

The encryption device 1 is an information processing device (computer) provided with a control unit 10 and a storage unit 20, as well as various input/output interfaces, etc.

The control unit 10 is a portion that controls the encryption device 1 overall, and that realizes the respective functions of the present embodiment by appropriately reading out and executing various programs stored in the storage unit 20. The control unit 10 may be a CPU.

The storage unit 20 is a storage area for various programs, various data, etc., for making a hardware group function as the encryption device 1, and may be a ROM, a RAM, a flash memory, a hard-disk drive (HDD), etc.

Specifically, the storage unit 20 stores a program (encryption program), etc. for making the control unit 10 execute the respective functions of the present embodiment.

The control unit 10 functions as a processing unit 11 by executing an encryption program. The processing unit 11, by calling a single prescribed instruction, collectively processes a group of round functions that can be executed in parallel.

In this case, the prescribed instruction that is implemented in the control unit 10 (processor) and that is called by the processing unit 11 has an upper limit on the number of bits that can be processed, and the round functions are grouped to minimize the processing load in accordance with the number of times the instruction is called.

For example, Intel CPUs of the Ice Lake generation implement the following two instructions that can process 256 bits and 512 bits at once:

$$\_\_m256i\ \_mm256\_aesenc\_epi128\ (\_\_m256i\ a,\ \_\_m256i\ RoundKey)$$

$$\_\_m512i\ \_mm512\_aesenc\_epi128\ (\_\_m512i\ a,\ \_\_m512i\ RoundKey)$$

By calling these instructions a single time, round function processes can be executed at the same time on inputs (multiple internal states) that are up to 256 bits (equivalent to two round functions) or 512 bits (equivalent to four round functions) long.

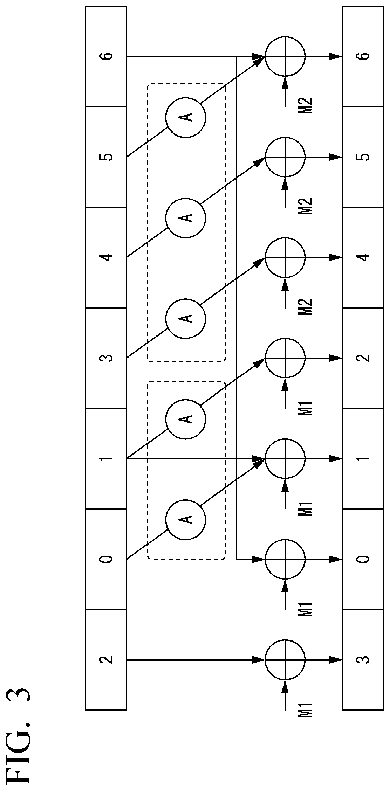

FIG. 3 is a diagram illustrating an example of the implementation method for an encryption scheme according to the present embodiment.

In the implementation method illustrated for the conventional example (FIG. 1), the processes for executing the AES round functions needed to be called a total of five times.

In contrast therewith, in the implementation method according to the present embodiment, the round functions (with 128-bit inputs) that are executed a total of five times are grouped so as to be executed, for example, two times and three times. Thus, the processing unit 11 processes two round functions by an instruction with a 256-bit input and processes three round functions by an instruction with a 512-bit input, so that the round functions are collectively processed a single time.

As a result thereof, processes conventionally requiring (the number of cycles in each round $\times$ 5) cycles can be executed by reducing the number of cycles to (the number of cycles in each round $\times$ 2).

In the example in FIG. 3, the five round functions are independent of each other and have no constraints in terms of the order of execution, and therefore can be executed algorithmically in parallel. Thus, they may be grouped in any combination. However, the combination should preferably be determined as indicated below in order to better improve the processing efficiency.

In various encryption schemes, the results of operations by round functions are often further converted by subsequent operations.

At this time, the processing can be made more efficient by grouping together the round functions, among multiple round functions, for which subsequent operations are of the same type (for example, XOR, AND, etc.), and by further grouping together the round functions, among multiple round functions, for which input values (messages) to subsequent operations are at least partially the same.

For example, in the example in FIG. 3, two round functions for the internal states 0 and 1 are grouped because the same message M1 is input to the subsequent XOR operations, and they are executed at the same time by an instruction for processing 256 bits or an instruction for processing 512 bits.

Additionally, the three round functions for the internal states 3 to 5 are collected as a group to which the same message M2 is input to the subsequent XOR operations, and they are executed at the same time by an instruction for processing 512 bits.

When multiple instructions can be used, such as those for 256 bits and for 512 bits mentioned above, if the processing loads are different from each other in accordance with the number of times the instructions are called, the overall processing loads can be compared for combinations of instructions and groups of round functions, and the groups and commands minimizing the processing load may be chosen.

According to the present embodiment, prescribed instruction sets implemented in a processor are used in an encryption scheme having AES round functions as constituent elements. Thus, the encryption device 1 can collectively execute multiple round functions and can reduce the overall number of processing cycles, i.e., the processing time, required for encryption and decryption. As a result thereof, the encryption processing speed can be increased, and furthermore, higher-speed encrypted communication, etc. can be realized.

The encryption device 1 can make the overall processing even more efficient by processing the round functions by grouping together those, among the multiple round functions, in which subsequent operations are of the same type, and furthermore, those in which input values to subsequent operations are at least partially the same.

Additionally, the encryption device 1 can appropriately group the round functions and make the processing more efficient by appropriately selecting multiple instructions having different upper limits on the number of bits that can be processed.

The aforementioned embodiment can, for example, realize high-speed encryption processes, and thus can contribute to Goal 9, "Build resilient infrastructure, promote inclusive and sustainable industrialization and foster innovation", of the sustainable development goals (SDGs) set forth by the United Nations.

While an embodiment of the present invention has been explained above, the present invention is not limited to the embodiment above. Additionally, the effects described for the embodiment above are merely an accounting of the most favorable effects obtained by the present invention, and the effects of the present invention are not limited to those described for the embodiment.

The encryption method according to the encryption device 1 can be realized by software. When realized by software, programs constituting this software are installed in an information processing device (computer). Additionally, these programs may be recorded on removable media such as CD-ROMs and distributed to users, or they may be distributed by being downloaded to users' computers via a network. Furthermore, these programs may be provided to users' computers as web services via a network without being downloaded.

[Reference Signs List]

1    Encryption device
10   Control unit
11   Processing unit
20   Storage unit

**Claims**

1. An encryption device that implements an encryption scheme in which Advanced Encryption Standard (AES) round functions are executed multiple times in order to update each of multiple internal states of a defined bit length, the encryption device comprising:

   a processing unit that, by calling a single prescribed instruction, collectively processes a group of the round functions that can be executed in parallel,
   wherein the instruction has an upper limit on a number of bits that can be processed, and the round functions are grouped to minimize a processing load in accordance with a number of times the instruction is called.

2. The encryption device according to claim 1, wherein, among the multiple round functions, those for which subsequent operations are of the same type are grouped.

3. The encryption device according to claim 2, wherein, among the multiple round functions, those for which input values to subsequent operations are at least partially the same are grouped.

4. The encryption device according to any one of claim 1 to claim 3, wherein the round functions are grouped by multiple instructions having different upper limits on the number of bits that can be processed.

5. An encryption method performed when a computer implements an encryption scheme in which AES round functions are executed multiple times in order to update each of multiple internal states of a defined bit length, the encryption method comprising:

   collectively processing, by calling a single prescribed instruction, a group of the round functions that can be executed in parallel,
   wherein the instruction has an upper limit on a number of bits that can be processed, and the round functions are grouped to minimize a processing load in accordance with a number of times the instruction is called.

6. An encryption program for making a computer function as the encryption device according to any one of claim 1 to claim 4.

FIG. 1

EP 4 383 235 A1

FIG. 2

CONTROL UNIT 10

PROCESSING UNIT 11

STORAGE UNIT 20

1

FIG. 3

## INTERNATIONAL SEARCH REPORT

International application No.

**PCT/JP2022/028741**

| A. | CLASSIFICATION OF SUBJECT MATTER |
|---|---|

*G09C 1/00*(2006.01)i
FI: G09C1/00 610Z

According to International Patent Classification (IPC) or to both national classification and IPC

| B. | FIELDS SEARCHED |
|---|---|

Minimum documentation searched (classification system followed by classification symbols)

G09C1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | SAKAMOTO, Kosei et al. Rocca: An Efficient AES-based Encryption Scheme for Beyond 5G [online], IACR Transactions on Symmetric Cryptology, vol. 2021, no. 2, 11 June 2021 [retrieved on 07 October 2022], pp. 1-30, Retrieved from the Internet <URL https://tosc.iacr.org/index.php/ToSC/article/view/8904/8480> in particular, see Optimized AES-NI-Friendly Round Function in 1.2 Our Design, 5 Software Implemetion, third paragraph, B Round function in table 2 | 1, 5–6 |
| Y | in particular, see Optimized AES-NI-Friendly Round Function in 1.2 Our Design, 5 Software Implemetion, third paragraph, B Round function in table 2 | 4 |
| A | entire text, all drawings | 2-3 |
| Y | LEBBINK, Henk-Jan, VAESENC, github [online], 2019 [retrieved on 07 October 2022], Retrieved from the Internet <URL https://github.com/HJLebbink/asm-dude/wiki/VAESENC> in particular, VAESENC | 4 |
| A | JP 2012-215816 A (SONY CORP.) 08 November 2012 (2012-11-08) abstract | 1-6 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 October 2022** | **18 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/028741**

| Patent document cited in search report | | | Publication date (day/month/year) | Patent family member(s) | | | Publication date (day/month/year) |
|---|---|---|---|---|---|---|---|
| JP | 2012-215816 | A | 08 November 2012 | US abstract | 2013/0343546 | A1 | |
| | | | | WO | 2012/132623 | A1 | |
| | | | | EP | 2693684 | A1 | |
| | | | | CN | 103621007 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021127442 A

**Non-patent literature cited in the description**

- Efficient Design Strategies Based on the AES Round Function. **J. JEAN ; 1. NIKOLIC.** Fast Software Encryption. Springer Berlin Heidelberg, 2016, vol. 9783, 334-353